# EUROPÄISCHE PATENTSCHRIFT

(11) **EP 1 132 128 B1**
(45) Veröffentlichungstag und Bekanntmachung des Hinweises auf die Patenterteilung: **12.07.2006**
(21) Anmeldenummer: 01103650.6
(22) Anmeldetag: 22.02.2001
(51) Int. Cl.: B01J 20/26, B01J 20/32, C07K 14/75, C08F 8/32

(54) **Verwendung des Adsorbens zur Herstellung eines Adsorbers zum Absenken der Konzentration von Fibrinogen und/oder Fibrin**
Use of an adsorbent for manufacturing an adsorber for lowering fibrinogen and/or fibrin concentration
Utilisation d'un adsorbant dans la fabrication d'un adsorbeur pour diminuer la concentration de fibrinogène et/ou de fibrine

(30) Priorität: 09.03.2000 DE 10011481
(43) Veröffentlichungstag der Anmeldung: 12.09.2001
(73) Patentinhaber: Fresenius Medical Care Deutschland GmbH, 61352 Bad Homburg (DE)
(72) Erfinder: Leinenbach, Hans-Peter, Dr., 66636 Tholey (DE); Otto, Veit, Dr., 66606 St. Wendel (DE); Hepper, Martin, 67435 Neustadt (DE)
(74) Vertreter: Müller-Boré & Partner Patentanwälte

(56) Entgegenhaltungen:
- EP-A- 0 303 329
- EP-A- 0 424 698
- EP-A- 0 434 354
- DE-A- 3 926 539
- DE-A- 19 729 591
- DE-A- 19 856 387
- US-A- 4 772 635
- US-A- 5 304 638

## Beschreibung

Die Erfindung betrifft die Verwendung eines Adsorbens zur Herstellung eines Adsorbers zum Absenken der Konzentration von Fibrinogen und/oder Fibrin in Blut oder Blutplasma, umfassend eine Matrix und kovalent an die Matrix gebundene synthetische Seitenketten mit mindestens zwei Aminogruppen, deren Stickstoffatome in der Kette mindestens 2,6 Ångström (0,26 nm) voneinander entfernt sind, wobei die synthetischen Seitenketten peptidfrei sind und keine aromatischen Gruppen aufweisen.

Adsorbentien sind in der Medizintechnik weit verbreitet. Häufig beschrieben werden Adsorber mit Adsorbentien, die aus Blut Lipoproteine niedriger Dichte (LDL) entfernen bzw. deren Konzentration herabsetzen, wie dies aus der DE 39 32 971 bekannt ist. Die Schrift beschreibt das Adsorbermaterial als einen organischen Träger mit festgelegter Partikelgröße und Ausschlußgrenze, der auf seiner Oberfläche einen Liganden trägt, an den das LDL-Molekül bindet.

In der DE 197 29 591 ist die Verwendung eines Liganden für Fibrinogen und/oder Fibrin beansprucht, um die aufgrund überhöhten Fibrinogenanteils im Blut erzeugten Krankheiten zu heilen oder diesen zumindest vorzubeugen. Der Ligand ist dabei in der DE 197 29 591 als eine Substanz definiert, die spezifisch an Fibrinogen und/oder Fibrin bindet und ist vorzugsweise ein Peptid mit drei bis 10 Aminosäuren.

Aus Artificial Organs, Band 20, Nr. 9 (1996), Seiten 986-990 ist die Reduzierung der Konzentrationen von Plasmafibrinogen, Immunoglobulin G (IgG) und Immunoglobulin M (IgM) durch Immunoadsorptionstherapie mit Tryptophan- oder Phenylalaninadsorbentien bekannt. In der Immunoadsorptionstherapie werden Adsorptionssäulen verwendet, die als Träger sphärische Polyvinylalkohol (PVA)-Gelteilchen aufweisen. Die PVA-Gelteilchen tragen auf ihrer Oberfläche entweder Tryptophan oder Phenylalanin als Aminosäureligand, der über Spacer kovalent an das PVA gebunden ist. Das von Blutzellen abgetrennte Plasma wird über die Adsorptionsäule geleitet und danach vor der Rückführung in den Patienten wieder mit den Blutzellen vereinigt. Mit dieser Immunoadsorptionstherapie werden gleichzeitig die Konzentrationen von Fibrinogen, IgG und IgM signifikant reduziert.

EP 0 434 354 A beschreibt ein Abtrennungsmaterial zur Abtrennung von Blutgerinnungsfaktoren, insbesondere der Isolierung des Faktors VIII und des Von-Willebrand-Faktors. Das Abtrennungsmaterial umfaßt dabei eine poröse Matrix, die einen oder mehrere Liganden aufweist.

EP 0 424 698 A beschreibt ein zur Eliminierung von Biomakromolekülen, insbesondere von LDL und Endotoxinen, aus Vollblut im extrakorporalen Kreislauf geeignetes Adsorbens, umfassend ein poröses Trägermaterial sowie einen organischen Liganden, der über einen Spacer an das Trägermaterial kovalent gebunden ist, dadurch gekennzeichnet, daß das Trägermaterial eine sphärische Gestalt aufweist.

US 5,304,638 A beschreibt ein Abtrennungsmittel zur Abtrennung von Proteinen bzw. Gerinnungsfaktoren, insbesondere die Isolierung des Faktors VIII. Das Abtrennungsmittel umfaßt dabei eine wasserunlösliche Matrix, die eine Vielzahl von Polyamin-Gruppierungen trägt.

EP 0 303 329 A beschreibt ein Verfahren und ein Adsorbensmaterial zur Isolierung von Koagulationsfaktoren, einschließlich Faktor VIII und Von-Willebrand-Faktor, aus Blutplasma und Plasmaprodukten.

US 4,772,635 A beschreibt die Verwendung von kugelförmigen, makroporösen quervemetzten Copolymeren, die Epoxid- und Aminogruppen enthalten, für die Herstellung von Anionenaustauschem und hydrophilen Chromatographieharzen.

Auch wenn die Adsorption als Mittel zur Linderung von Krankheiten mittlerweile in den klinischen Alltag eingezogen ist, so werden doch steigende Anforderungen an die Selektivität der Adsorption gestellt. Das heißt, daß die Adsorber zum einen keine bzw. so wenig wie möglich für den Menschen notwendige Proteine adsorbieren dürfen, aber auf der anderen Seite die Herabsetzung der Konzentration schädlicher Proteine so hoch ist, daß die den Patienten belastende extrakorporale Behandlung möglichst effektiv wird.

Es ist seit einiger Zeit bekannt, daß eine Reihe von Krankheiten auf mangelnder Mikrozirkulation des Blutes beruhen. Als Beispiele seien die in der nachfolgenden Tabelle 1 aufgeführten Krankheiten genannt.

**Tabelle 1:**

| |
|---|
| ZNS: |
| Schlaganfal |
| lTIA (Transient Ischemic Attack) |
| PRIND (Prolonged Reversible Ischemic Neurological Deficit) |
| Chronische vaskuläre Erkrankungen des ZNS |
| Chronische intracranielle Durchblutungsstörungen |
| Chronische extracranielle Durchblutungsstörungen |
| Zerebrovaskuläre Durchblutungsstörungen |
| Demenz |
| Alzheimer Krankheit |
| Schwerer zentraler Schwindel |
| |
| Auge: |
| Chronische Durchblutungsstörung |
| Akutes Gefäßverschluß |
| |
| Ohr: |
| Hörsturz |
| Innenohr bedingter Schwindel |
| Morbus Menière |
| |
| Lunge: |
| Primäre Pulmonale Hypertonie |
| Venoocclusive Erkrankungen der Lunge |
| Tnrombotische primäre pulmonale Hypertonie |
| Thromboembolische Erkrankungen der großen Gefäße |
| |
| Herz: |
| Transplantationsvaskulopathien |
| Akuter Myokardinfarkt |
| Instabile Angina pectoris |
| Small vessel discase des Herzens |
| Nicht operable-schwere koronare Herzkrankheit |
| Kardiomyopathien |
| |
| Abdomen: |
| Angina abdominalis |
| |
| Nieren: |
| Vaskulopathien der Nieren |
| Glomerulonephritiden |
| Chronische Niereninsuffizienz |
| |
| Periphere arterielle Verschlußkrankheiten |
| Akute Gefäßverschlüsse |
| Vaskulitiden |
| Septischer Scheck |
| Disseminierte intravaskuläre Coagulation (DIC) anderer Genese, z. B. bei Tumorerkrankungen |
| Diabetes Typ I + II |
| Diabetische Retinopathie |
| Diabetische Neuropathie |
| Diabetische Nephropathie. |

Bislang werden diese Krankheiten hauptsächlich medikamentös behandelt und dabei oft nur die Symptome beseitigt. Die bislang bekannten Maßnahmen, die Mikrozirkulation und die Rheologie des Blutes zu behandeln und zu beeinflussen, bestehen im Plasmaaustausch, der Heparin-induzierten extrakorporalen LDL-Cholesterin-Präzipitation (HELP) und in der Adsorption von Fibrinogen mit Hilfe eines Ligandes an den Fibrin und/oder Fibrinogen spezifisch bindet. Die Verwendung eines derartigen Liganden ist in der DE 197 29 591 beschrieben. Als Liganden werden Peptide genannt, die vorzugsweise 3 bis 10 Aminosäuren aufweisen, wobei die besonders bevorzugte Sequenz Glycin-Prolin-Arginin-Prolin-X sein soll.

Die synthetische Herstellung von Peptiden ist jedoch ein umständliches und kostenaufwendiges Verfahren, so daß der Einsatz als Ligand eines spezifischen Adsorbers sehr kostspielig ist.

Darüber hinaus lösen Peptide ab einer bestimmten Länge bereits Antikörperreaktionen aus, so daß es nach wiederholter Anwendung langfristig zu heftigen Immunreaktionen kommen kann. Zwar werden, um die Immunabwehr herabzusetzen, möglichst kurze Peptidoligomere verwendet, doch kann eine Immunogenität nie voll ausgeschlossen werden. Außerdem ist eine Leckage, ein unbemerktes Ablösen von Peptidstücken, besonders gefährlich, da Peptide als Bestandteil von körpereigenen Strukturen bioaktive Moleküle darstellen.

Auch die Immunoadsorptionstherapie, wie in Artificial Organs, Band 20, Nr. 9 (1996), Seiten 986-990 beschrieben, verwendet die Aminosäuren Tryptophan oder Phenylalanin zur Anbindung an die PVA-Gelteilchen und ist daher ebenfalls umständlich und kostspielig. Überdies werden mit dieser Therapie auch Substanzen, die nicht aus dem Plasma entfernt werden sollen, wie IgG und IgM, in vergleichbaren Mengen aus dem Plasma abgetrennt, wie das Fibrinogen.

Es ist Aufgabe vorliegender Erfindung, ein Adsorbens zum Absenken der Konzentration von Fibrinogen und/oder Fibrin in Blut oder Blutplasma zu schaffen, das bessere Eliminationsraten aufweist und kostengünstiger herzustellen ist, als die im Stand der Technik bekannten Adsorbentien, und welches biokompatibel ist, Selektivität für Fibrinogen und/oder Fibrin besitzt und keine Immunabwehr hervorruft. Die Aufgabe wird durch die Verwendung eines Adsorbens gemäß den Merkmalen des Anspruchs 1 zur Herstellung eines Adsorbers gelöst. Bevorzugte Ausführungsformen der erfindungsgemäßen Verwendung eines Adsorbens zur Herstellung eines Adsorben sind in den weiteren Ansprüchen definiert.

Überraschenderweise hat sich herausgestellt, daß ein Adsorbens, welches eine Matrix und kovalent an die Matrix gebundene synthetische Seitenketten aufweist, wobei die Seitenketten mindestens zwei in der Kette voneinander räumlich getrennte Aminogruppen enthalten, bereits eine derart deutliche Absenkung des Fibrinogenspiegels bewirkt, daß die Mikrozirkulation nach Behandlung verbessert ist.

Dabei ist der räumliche Abstand der Aminogruppen für die Bindungsfähigkeit wichtig und beträgt mindestens 2,6 Ångström (0,26 nm). Sind die Aminogruppen weiter voneinander entfernt als 10 Atome, die ausgewählt sind aus der Gruppe Kohlenstoff, Sauerstoff, Schwefel und/oder Phosphor, wobei die Atome vorzugsweise Kohlenstoffatome sind, wird die Wirkung wieder herabgesetzt. Die Atome können dabei nur aus einer Atomart bestehen, es ist jedoch jegliche Kombination der genannten Atomarten möglich. Sind die Aminogruppen weniger als vier Atome voneinander entfernt, wird die Seitenkette chemisch instabiler. Aus diesem Grund ist eine Kettenlänge von 4 bis 6 Atomen, vorzugsweise Kohlenstoffatome, zwischen den Aminogruppen bevorzugt.

Wichtig für den Einsatz eines derartigen Adsorbens ist die Möglichkeit der Sterilisierbarkeit, insbesondere der Hitzesterilisierbarkeit, da das behandelte Blut wieder dem Patienten zugeführt werden soll und keine Sepsis oder Entzündungen auslösen darf. Die im Stand der Technik verwendeten Peptide und Aminosäuren sind nicht hitzestabil oder chemisch stabil im Gegensatz zu der erfindungsgemäßen Matrix, die vorzugsweise eine organische Matrix ist, und stabile Seitenketten aufweist. Daher sind die erfindungsgemäß kovalent an die Matrix gebundenen synthetischen Seitenketten vollständig frei von Peptiden.

Überraschenderweise wurde festgestellt, daß die Absenkung der Konzentration von Fibrinogen geringer ist, wenn sich in unmittelbarer Nähe der Aminogruppe(n) Carbonylgruppen oder Carboxylgruppen befinden. Offensichtlich wird die Bindungskapazität der Aminogruppen aufweisenden Seitenketten an das Fibrinogen und/oder Fibrin durch das Vorhandensein von Carbonyl- oder Carboxylgruppen eingeschränkt. Aus diesen Gründen sind die erfindungsgemäß kovalent an die Matrix gebundenen synthetischen Seitenketten vorzugsweise vollständig frei von Carbonyl- und Carboxylgruppen. Überdies hat sich erwiesen, daß auch die Anwesenheit von aromatischen Gruppen in den Seitenketten die Bindungskapazität ungünstig beeinflußt und auch die Selektivität des Absorbens hinsichtlich Fibrinogen und/oder Fibrin vermindert ist. Daher weisen die kovalent gebundenen synthetischen Seitenketten des erfindungsgemäßen Adsorbens keine aromatischen Gruppen auf.

Der hier gebrauchte Ausdruck "synthetisch" bedeutet, daß zur Einführung der Seitenketten in die Matrix kein biologisches Material verwendet wird, insbesondere keine Peptide, d.h. keine Dipeptide, Tripeptide, Oligopeptide, Polypeptide, Proteine (Makropeptide), selbst wenn sie synthetisch hergestellt worden sind.

Darüber hinaus ist das erfindungsgemäße Adsorbens biokompatibel. Prinzipiell sind mehrere Trägermaterialien als Matrix denkbar, wie beispielweise Glas, Kohlenhydrate, Sepharose, Silica oder organische Matrices, wie Copolymere von Acrylaten oder Methacrylaten sowie Polyamiden. Vorzugsweise besteht die Matrix aus organischem Material und besonders bevorzugt sind von (Meth)acrylsäureestern und/oder -amiden abgeleitete Copolymere. Diese weisen vorzugsweise Epoxidgruppen auf. Unter dem Begriff "(Meth)acryl" sind sowohl die entsprechenden Acryl- als auch Methacrylverbindungen zu verstehen.

Als Matrix für das erfindungsgemäße Absorbens ist am meisten bevorzugt ein durch Polymerisation der monomeren Einheiten
(A) (Meth)acrylamid in einer Menge von 10 bis 30 Gew.-%,
(B) N,N'-Methylen-bis(meth)acrylamid in einer Menge von 30 bis 80 Gew.-%, und
(C) Allylglycidylether und/oder Glycidyl-(meth)acrylat in einer Menge von 10 bis 20 Gew.-%, jeweils bezogen auf das Gesamtgewicht der monomeren Einheiten,
hergestelltes, statistisches Copolymer.

Das Copolymer wird vorzugsweise durch Suspensionspolymerisation hergestellt.

Ein derartiges Copolymer ist im Handel unter der Bezeichnung Eupergit C250L bzw. Eupergit FE162 von Röhm GmbH erhältlich.

Bei Verwendung des vorgenannten Copolymers oder einer anderen organischen Matrix, das bzw. die Oxirangruppen (Epoxidgruppen) enthält, z.B. ein im Rahmen der vorliegenden Erfindung ebenfalls bevorzugtes Copolymer, welches durch Suspensionspolymerisation von Ethylenglycoldimethacrylat und Glycidylmethacrylat und/oder Allylglycidylether erhalten wurde, werden diese Oxirangruppen vor der Einführung der kovalent anzubindenden synthetischen Seitenketten vorzugsweise mit Ammoniak oder einem primären Amin aminiert. Dabei ist Ammoniak aus verfahrenstechnischen Gründen und aus Kostengründen bevorzugt.

Die Matrix wird dann mit einer oder mehreren Verbindungen umgesetzt, so daß im Ergebnis eine Seitenkette erhalten wird, die mindestens zwei Aminogruppen aufweist, deren Stickstoffatome mindestens 2,6 Ångström (0,26 nm) voneinander entfernt in der Kette angeordnet sind. Bei einer bereits aminierten Matrix oder einer Matrix, die bereits Aminogruppen enthält, ist hierfür im Extremfall eine Verbindung mit einer Aminogruppe ausreichend, wie beispielsweise Ethanolamin.

Die Matrix kann in der Form von sphärischen, unaggregierten Partikeln, sog. Beads, Fasern oder einer Membran vorliegen, wobei eine Porosität der Matrix die Oberfläche erhöht. Die Porosität kann beispielsweise durch Zugabe von Porenbildnern, wie Cyclohexanol oder 1-Dodecanol zu der Reaktionsmischung der Suspensionspolymerisation erreicht werden. Es ist des weiteren vorteilhaft, wenn die Matrix eine Ausschlußgrenze von mindestens 10⁷ Dalton besitzt, so daß das Fibrinogen mit dem Plasma in die Poren eindringen kann, um zu den Aminogruppen enthaltenden Seitenketten zu gelangen.

Eine weitere vorteilhafte Ausgestaltung der Erfindung liegt darin, den erfindungsgemäßen Adsorber durch die geeignete Wahl der Trägermatrix im Vollblut einzusetzen. Dazu besteht die Matrix aus unaggregierten, sphärischen Partikeln in einem Teilchengrößenbereich von 50 bis 250 µm und besitzt eine Ausschlußgrenze von mindestens 10⁷ Dalton. Dadurch können Blutzellen in Kontakt mit dem Adsorbermaterial treten, ohne daß sich die Säule zusetzt oder unzumutbar viele Zellen zurückgehalten werden oder aggregieren. Dies wird durch die Größe und die sphärische Gestalt der Beads in Verbindung mit der Ausschlußgrenze bei dem erfindungsgemäßen Adsorbens ermöglicht, da die Zellen an der glatten äußeren Oberfläche der Beads entlanggleiten, wodurch nur geringe Thrombozytadhäsion erfolgt und das Plasma mit dem Fibrinogen dennoch die Möglichkeit hat, in die Poren einzudringen.

Dadurch entfallen extrakorporale Schritte, wie die Abtrennung von Blutzellen, das Behandeln des isolierten Plasmas und das Zusammenführen der Blutbestandteile, wodurch die Biokompatibilität des Verfahrens gesteigert wird, beispielsweise die Gefahr einer Komplementaktivierung weiter erheblich verringert wird. Das Entfallen extrakorporaler Schritte bewirkt eine Verkürzung der Behandlungszeit und eine Vereinfachung des Verfahrens, wodurch eine Erhöhung der Sicherheit und des Wohlbefindens des Patienten erreicht wird.

Ein mit dem erfindungsgemäßen Absorbens ausgerüsteter Absorber weist ein Gehäuse auf, welches vorzugsweise in Röhren- oder Säulenform ausgebildet ist, und welches das Absorbens als Füllmaterial enthält. Im Hinblick auf die üblicherweise durchzusetzenden Blut- bzw. Blutplasmamengen und die Effizienz des erfindungsgemäßen Absorbers umfaßt der Absorber vorzugsweise ein Volumen von 250 bis 1250 ml. Der Absorber kann einzeln oder im Doppel- oder Mehrfachbetrieb eingesetzt werden. Bei zwei oder mehr Adsorbern besteht die Möglichkeit, abwechselnd einen Adsorber mit dem Blut bzw. Blutplasma zu beschicken, während der andere Adsorber regeneriert wird. Dies führt zu einer weiteren Effizienz beim Einsatz des erfindungsgemäßen Adsorbers. Der Adsorber ist vorzugsweise so ausgebildet, daß er ein Gehäuse mit einem kopfseitigen Einlaßbereich aufweist, durch den das Blut oder Blutplasma dem Adsorber zugeführt wird, wobei sich in diesem Fall der Auslaß am Boden des Gehäuses des Adsorbers befindet. Um zu verhindern, daß unerwünschte Substanzen, z.B. Substanzen, die vom Adsorbensmaterial herrühren, mit dem behandelten Blut bzw. Blutplasma in den Blutkreislauf des Patienten zurückgeführt wird, befindet sich am Auslaß des Gehäuses des Adsorbers vorzugsweise ein Filter. Dabei handelt es sich vorzugsweise um einen Partikelfilter.

Im folgenden sind beispielhaft drei Arten der Einführung von kovalent an die Matrix gebundenen synthetischen Seitenketten mit zwei Aminogruppen, deren Stickstoffatome mindestens 2,6 Å in der Kette voneinander entfernt sind, angegeben.

### Beispiel 1:

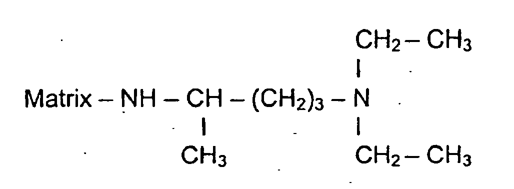

Das 2-Amino-5-diethylaminopentan (Sigma-Aldrich, Lot-No 50619011) wurde an Eupergit C 250 L (Röhm GmbH, Lot-No 1690419573) gebunden.

Der Oxirangruppengehalt des Eupergit wird stets -wie vom Hersteller vorgeschlagen- über Rücktitration mit Natriumthiosulfat bestimmt. Die eingewogene Eupergitmenge von 5g Trockengewicht wird mit 50ml Phosphatpuffer (0,1M, pH 6,8) gewaschen und nach Zugabe der dem Oxirangruppengehalt equimolaren Menge an Beschichtungslösung (2-Amino-5-diethylaminopentan in 0.1M Phosphatpuffer, 0.15M NaCI, 0,02% NaN₃) für 72h auf dem Rollenmischer bei Raumtemperatur inkubiert. Das Adsorbens wird mit physiologischer Kochsalzlösung gewaschen und unter Zugabe von 0,02% NaN₃ darin aufbewahrt.

### Beispiel 2:

Matrix - NH - CH₂ - (CH₂)₃ - CH₂ -NH - CH₂- CH₂- OH

Ethanolamin (Fluka Lot-No 369736/1-23597) wurde über Glutardialdehyd (Fluka, Lot-No 369366/1) an zuvor aminiertes Eupergit C 250 L (Röhm GmbH, Lot No 1690419573), gebunden:

Pro 10g Trockengewicht Eupergit werden 100ml Ammoniak 12,5% zugegeben und 4h auf dem Taumelschüttler bei Raumtemperatur inkubiert, anschließend 10 mal mit je 200ml Aqua dest. gewaschen. Zweimal je 40ml Glutardialdehyd-Lösung 0,4% in Phosphatpuffer werden für je 2h bei 40°C mit dem aminierten Eupergit inkubiert. Das Adsorbens wird 10 mal mit 100ml Aqua dest. gewaschen. Nach Zugabe der dem Oxirangruppengehalt equimolaren Menge an Beschichtungslösung (Ethanolamin in 0,1M Phosphatpuffer, 0,15M NaCI, 0,02% NaN₃) wird 72h auf dem Rollenmischer bei Raumtemperatur inkubiert. Nach Equilibierung mit je 50ml Phosphatpuffer wird das Adsorbens über Nacht bei 4°C durch Zugabe von 50ml 5mM Ascorbinsäure in Phosphatpuffer pH 6,8 reduziert. Das Adsorbens wurde mit physiologischer Kochsalzlösung gewaschen und unter Zugabe von 0,02% NaN₃ darin aufbewahrt.

### Beispiel 3:

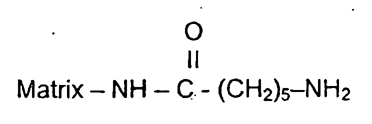

6-Aminohexansäure (Merck; Chargenr. 5214629) wurde nach Aktivierung mit Carbodiimid (EDC Aldrich Lot-No 05503-125) ebenfalls an zuvor aminiertes Eupergit C 250 L (Röhm GmbH, Eupergit Chargenr. 0480619145) gebunden.

10 g Eupergit werden aminiert und anschließend wie beschrieben gewaschen. Nach Zugabe von 10 ml EDC-Lösung (4% in phys. NaCI) und 100 ml 6-Aminohexansäurelösung (0,3 M in 0,1 M Phosphatpuffer, pH 6,8) für 4h bei Raumtemperatur wird auf einem Schüttler inkubiert und anschließend über Nacht bei 4°C aufbewahrt. Das Reaktionsgemisch wird danach 10 mal mit je 200 ml Aqua dest. gewaschen und in physiologischer Kochsalzlösung mit 0,02% Natriumazid aufbewahrt.

Die so gewonnenen Absorbentien wurden in einem Batchverfahren auf ihre Bindungseigenschaft zu Fibrinogen getestet. Dazu wurden jeweils 5 ml humanes Plasma, welches im Verhältnis 20:1 mit Citrat antikoaguliert war, mit 1g (Feuchtgewicht) Adsorbens 1h bei Raumtemperatur auf einem Rollenmischer inkubiert. Sowohl vor Inkubation als auch nach Inkubation wurde im Überstand der Fibrinogengehalt turbidimetrisch nach der CLAUSS-Methode (Clauss, A., Gerinnungsphysiologische Schnellmethode zur Bestimmung des Fibrinogens: Acta Haematologica (1957) 17, 237-246) an einem Koagulometer (BCS der Firma Behring) bestimmt. Die Bindungskapazität ergibt sich aus Differenzen der Prä- und Postwerte. In allen Beispielen betrug die Ausgangskonzentration an Fibrinogen 3,33 mg/ml Plasma.

In der nachfolgend aufgeführten Graphik ist die Fibrinogenabsenkung der angeführten Beispiele im Vergleich zu den im Stand der Technik bekannten Peptidliganden angeführt. Dabei wurden die Peptide direkt an Eupergit C 250 L (Röhm GmbH, Lot No 1690419573) gekoppelt:

Das Eupergit wird wie oben beschrieben mit Phosphatpuffer gewaschen und durch Zugabe der Beschichtungslösung (zu Oxirangruppen equimolare Peptidmengen in 0.1M Phosphatpuffer, 0.15M NaCI, 0,02% NaN₃) bei Raumtemperatur 72h auf dem Rollenmischer inkubiert. Anschließend wird mit physiologischer Kochsalzlösung gewaschen und unter Natriumazid aufbewahrt.

Die folgenden Abbildungen zeigen die Bindungskapazität der einzelnen Gele in mg Fibrinogen/ g Gel

## Patentansprüche

1. Verwendung eines Adsorbens zur Herstellung eines Adsorbers zum Absenken der Konzentration von Fibrinogen und/oder Fibrin, in Blut oder Blutplasma, wobei das Adsorbens eine Matrix und kovalent an die Matrix gebundene synthetische Seitenketten mit mindestens zwei Aminogruppen, deren Stickstoffatome in der Kette mindestens 2,6 Å voneinander entfernt sind, wobei die synthetischen Seitenketten Peptid-frei sind und keine aromatischen Gruppen aufweisen, umfaßt.

2. Verwendung nach Anspruch 1, wobei die Aminogruppen in den Seitenketten durch mindestens ein Atom aus der Gruppe Kohlenstoff, Sauerstoff, Schwefel und/oder Phosphor voneinander getrennt sind.

3. Verwendung nach Anspruch 1 oder 2, wobei die Aminogruppen in den Seitenketten durch mindestens ein und maximal zehn Atome aus der Gruppe Kohlenstoff, Sauerstoff, Schwefel und/oder Phosphor voneinander getrennt sind, und wobei die Atome aus nur einer Art oder einer jeglichen Kombination davon bestehen können.

4. Verwendung nach einem oder mehreren der vorhergehenden Ansprüche, wobei die Aminogruppen in den Seitenketten durch vier bis sechs Atome aus der Gruppe Kohlenstoff, Sauerstoff, Schwefel und/oder Phosphor voneinander getrennt sind.

5. Verwendung nach einem oder mehreren der vorhergehenden Ansprüche, wobei die Aminogruppen in den Seitenketten durch vier bis sechs Kohlenstoffatome voneinander getrennt sind.

6. Verwendung nach einem oder mehreren der vorhergehenden Ansprüche, wobei die Matrix eine organische Matrix ist.

7. Verwendung nach Anspruch 6, wobei die organische Matrix ein von (Meth)acrylsäureestem und/oder -amiden abgeleitetes Copolymer ist.

8. Verwendung nach Anspruch 7, wobei das von (Meth)acrylsäureestem und/oder -amiden abgeleitete Copolymer Epoxidgruppen aufweist.

9. Verwendung nach Anspruch 7 oder 8, wobei das Copolymer ein durch Polymerisation der monomeren Einheiten
(A) (Meth)acrylamid in einer Menge von 10 bis 30 Gew.-%,
(B) N, N'-Methylen-bis(meth)acrylamid in einer Menge von 30 bis 80 Gew.-%, und
(C) Allylglycidylether und/oder Glycidyl(meth)acrylat in einer Menge von 10 bis 20 Gew.-%, jeweils bezogen auf das Gesamtgewicht der monomeren Einheiten,
hergestelltes, statistisches Copolymer ist.

10. Verwendung nach einem oder mehreren der Ansprüche 7 bis 9, wobei die Seitenketten über Aminbrücken (-NH-), die von Ammoniak oder einem primären Amin stammen, an die Epoxidgruppen der Matrix gebunden sind.

11. Verwendung nach einem oder mehreren der vorhergehenden Ansprüche, wobei die kovalent an die Matrix gebundene synthetische Seitenkette mit mindestens zwei Aminogruppen 2-Amino-5-diethylaminopentan ist.

12. Verwendung nach einem oder mehreren der Ansprüche 1 bis 10, wobei die kovalent an die Matrix gebundene synthetische Seitenkette mit mindestens zwei Aminogruppen durch Umsetzung der aminierten organischen Matrix mit Ethanolamin oder 6-Aminohexansäure erhalten wurde.

13. Verwendung nach einem oder mehreren der vorhergehenden Ansprüche, wobei die kovalent an die organische Matrix gebundene synthetische Seitenkette mit mindestens zwei Aminogruppen keine Carbonyl- oder Carboxylgruppen aufweist.

14. Verwendung nach einem oder mehreren der vorhergehenden Ansprüche, wobei die organische Matrix aus sphärischen, unaggregierten Partikeln besteht.

15. Verwendung nach einem oder mehreren der vorhergehenden Ansprüche, wobei die organische Matrix aus sphärischen, unaggregierten Partikeln mit einer Partikelgröße von 50 bis 250 µm besteht.

16. Verwendung nach einem oder mehreren der vorhergehenden Ansprüche, wobei die organische Matrix aus porösen, sphärischen, unaggregierten Partikeln mit einer Partikelgröße von 50 bis 250 µm und einer Ausschlußgrenze von mindestens 10⁷ Dalton besteht.

17. Verwendung nach einem oder mehreren der vorhergehenden Ansprüche, wobei der Adsorber aus einem Gehäuse und dem darin beinhalteten Adsorbens besteht.

18. Verwendung nach Anspruch 17, wobei der Adsorber ein Volumen von 250 bis 1250 ml umfaßt.

19. Verwendung nach Anspruch 17 oder 18, wobei der Adsorber einen kopfseitigen Einlaßbereich und einen Auslaßbereich am Boden aufweist.

20. Verwendung nach einem oder mehreren der Ansprüche 17 bis 19, wobei der Adsorber in seinem Auslaßbereich einen Filter aufweist.

21. Verwendung nach Anspruch 20, wobei der Filter ein Partikelfilter ist.

## Claims

1. Use of an adsorbent for producing an adsorber for reducing the concentration of fibrinogen and/or fibrin in blood or blood plasma, where the adsorbent comprises a matrix and, covalently bonded to the matrix, synthetic side chains having at least two amino groups whose nitrogen atoms in the chain are at least 2.6 Å apart, where the synthetic side chains are peptide-free and have no aromatic groups.

2. Use according to Claim 1, where the amino groups in the side chains are separated from one another by at least one atom from the group of carbon, oxygen, sulphur and/or phosphorus.

3. Use according to Claim 1 or 2, where the amino groups in the side chains are separated from one another by at least one and a maximum of ten atoms from the group of carbon, oxygen, sulphur and/or phosphorus, and where the atoms can consist of only one type or any combination thereof.

4. Use according to one or more of the preceding claims, where the amino groups in the side chains are separated from one another by four to six atoms from the group of carbon, oxygen, sulphur and/or phosphorus.

5. Use according to one or more of the preceding claims, where the amino groups in the side chains are separated from one another by four to six carbon atoms.

6. Use according to one or more of the preceding claims, where the matrix is an organic matrix.

7. Use according to Claim 6, where the organic matrix is a copolymer derived from esters and/or amides of (meth)acrylic acid.

8. Use according to Claim 7, where the copolymer derived from esters and/or amides of (meth)acrylic acid has epoxy groups.

9. Use according to Claim 7 or 8, where the copolymer is a random copolymer prepared by polymerizing the monomeric units
(A) (meth)acrylamide in an amount of from 10 to 30% by weight,
(B) N,N'-methylenebis(meth)acrylamide in an amount of from 30 to 80% by weight, and
(C) allyl glycidyl ether and/or glycidyl (meth)acrylate in an amount of from 10 to 20% by weight, in each case based on the total weight of the monomeric units,

10. Use according to one or more of Claims 7 to 9, where the side chains are linked via amine bridges (-NH-) derived from ammonia or a primary amine to the epoxy groups of the matrix.

11. Use according to one or more of the preceding claims, where the synthetic side chain having at least two amino groups which is covalently bonded to the matrix is 2-amino-5-diethylaminopentane.

12. Use according to one or more of Claims 1 to 10, where the synthetic side chain having at least two amino groups which is covalently bonded to the matrix has been obtained by reacting the aminated organic matrix with ethanolamine or 6-aminohexanoic acid.

13. Use according to one or more of the preceding claims, where the synthetic side chain having at least two amino groups which is covalently bonded to the matrix has no carbonyl or carboxyl groups.

14. Use according to one or more of the preceding claims, where the organic matrix consists of spherical, unaggregated particles.

15. Use according to one or more of the preceding claims, where the organic matrix consists of spherical, unaggregated particles having a particle size of from 50 to 250 µm,

16. Use according to one or more of the preceding claims, where the organic matrix consists of porous, spherical, unaggregated particles having a particle size of from 50 to 250 µm and an exclusion limit of at least 10⁷ daltons.

17. Use according to one or more of the preceding claims, where the adsorber consists of a housing and of the adsorbent contained therein.

18. Use according to Claim 17, where the adsorber comprises a volume of from 250 to 1250 ml.

19. Use according to Claim 17 or 18, where the adsorber has an inlet zone at the top and an outlet zone at the bottom.

20. Use according to one or more of Claims 17 to 19, where the adsorber has a filter in its outlet zone.

21. Use according to Claim 20, where the filter is a particle filter.

## Revendications

1. Utilisation d'un absorbant dans la fabrication d'un absorbeur pour diminuer la concentration de fibrinogène et/ou de fibrine dans le sang ou le plasma sanguin, dans laquelle l'absorbant comprend une matrice et des chaînes latérales synthétiques liées de manière covalente à la matrice par au moins deux groupes amino dont les atomes d'azote sont distants les uns des autres d'au moins 2,6 Å dans la chaîne, dans laquelle les chaînes synthétiques sont dépourvues de peptide et ne présentent pas de groupes aromatiques.

2. Utilisation selon la revendication 1, dans laquelle les groupes amino dans la chaîne latérale sont séparés les uns des autres par au moins un atome du groupe comprenant le carbone, l'oxygène, le soufre et/ou le phosphore.

3. Utilisation selon la revendication 1 ou 2, dans laquelle les groupes amino dans les chaînes latérales sont séparés les uns des autres par au moins un et au maximum dix atomes du groupe comprenant le carbone, l'oxygène, le soufre et/ou le phosphore, et dans laquelle les atomes peuvent n'être constitués que d'une sorte et ou de toute combinaison de ceux-ci.

4. Utilisation selon l'une ou plusieurs des revendications précédentes, dans laquelle les groupes amino dans les chaînes latérales sont séparés les uns des autres dans les chaînes latérales par quatre à six atomes du groupe comprenant le carbone, l'oxygène, le soufre et/ou le phosphore.

5. Utilisation selon l'une ou plusieurs des revendications précédentes, dans laquelle les groupes amino sont séparés les uns des autres dans les chaînes latérales par quatre à six atomes de carbone.

6. Utilisation selon l'une ou plusieurs des revendications précédentes, dans laquelle la matrice est une matrice organique.

7. Utilisation selon la revendication 6, dans laquelle la matrice organique est un copolymère dérivé d'esters d'acides (méth)acryliques et/ou d'amides.

8. Utilisation selon la revendication 7, dans laquelle le copolymère dérivé d'esters d'acides (méth)acrylique et/ou d'amides présente des groupes époxyde.

9. Utilisation selon la revendication 7 ou 8, dans laquelle le copolymère est un copolymère statique produit par polymérisation des unités monomériques
(A) (méth)acrylamide en une quantité de 10 à 30 % en poids,
(B) N,N'-méthylène-bis(méth)acrylamide en une quantité de 30 à 80 % en poids, et
(C) éther d'allylglycidyléther et/ou glycidyl(méth)acrylate en une quantité de 10 à 20 % en poids, respectivement par rapport au poids total des unités monomériques.

10. Utilisation selon l'une ou plusieurs des revendications 7 à 9, dans laquelle les chaînes latérales sont liées aux groupes époxydes de la matrice par des ponts amine (-NH-) qui proviennent de l'ammoniaque ou d'une amine primaire.

11. Utilisation selon l'une ou plusieurs des revendications précédentes, dans laquelle la chaîne latérale synthétique liée de manière covalente à la matrice par au moins deux groupes amino est le 2-amino-5-diéthylaminopentane.

12. Utilisation selon l'une ou plusieurs des revendications 1 à 10, dans laquelle la chaîne latérale liée de manière covalente à la matrice par au moins deux groupes amino a été obtenue par transformation de la matrice organique aminée par l'éthanolamine ou l'acide 6-aminohexane.

13. Utilisation selon l'une ou plusieurs des revendications précédentes, dans laquelle la chaîne synthétique liée de manière covalente à la matrice organique par au moins deux groupes amino ne présente pas de groupes carbonyle ou carboxyle.

14. Utilisation selon l'une ou plusieurs des revendications précédentes, dans laquelle la matrice organique est constituée de particules sphériques non agrégées.

15. Utilisation selon l'une ou plusieurs des revendications précédentes, dans laquelle la matrice organique est constituée de particules sphériques non agrégées présentant une taille de particules de 50 à 250 µm.

16. Utilisation selon l'une ou plusieurs des revendications précédentes, dans laquelle la matrice organique est constituée de particules poreuses, sphériques non agrégées présentant une taille de particules de 50 à 250 µm et d'un seuil d'exclusion d'au moins 10⁷ Dalton.

17. Utilisation selon l'une ou plusieurs des revendications précédentes, dans laquelle l'absorbeur est constitué d'une enveloppe et de l'absorbant contenu dans celui-ci.

18. Utilisation selon la revendication 17, dans laquelle l'absorbeur comprend un volume de 250 à 1 250 ml.

19. Utilisation selon la revendication 17 ou 18, dans laquelle l'absorbeur présente une zone d'admission de tête et une zone d'échappement de fond.

20. Utilisation selon l'une ou plusieurs des revendications 17 à 19, dans laquelle l'absorbeur présente un filtre dans sa zone d'échappement.

21. Utilisation selon la revendication 20, dans laquelle le filtre est un filtre à particules.
